# EUROPÄISCHE PATENTANMELDUNG

(11) **EP 2 048 767 A2**
(43) Veröffentlichungstag der Anmeldung: **15.04.2009**
(21) Anmeldenummer: 08165474.1
(22) Anmeldetag: 30.09.2008
(51) Int. Cl.: H02K 11/00, H02K 5/22

(54) **Steuergerät**

(30) Priorität: 08.10.2007 DE 102007000961
(71) Anmelder: ZF-Lenksysteme GmbH, 73527 Schwäbisch Gmünd (DE)
(72) Erfinder: Heger, Markus, 73565 Spraitbach (DE); Gaedke, Alexander, 73525, Schwäbisch Gmünd (DE); Hauck, Michael, 73630, Remshalden (DE)

(57) **Zusammenfassung**

Die Erfindung betrifft ein Steuergerät (10), insbesondere für eine Lenkung mit elektrischer Hilfskraftunterstützung, das an einer bestimmten Stelle an einer Außenhülle eines Elektromotors (12) angeordnet ist. Die bisher bekannten Steuergeräte erfordern relativ aufwändige elektrische Verbindungen zwischen Steuergerät und Elektromotor. Außerdem sind hohe Anforderungen bezüglich des Einbauraumes einzuhalten. Deshalb sind das Steuergerät (10) und der Elektromotor (12) mittels einer an einer Stirnseite des Elektromotors (12) vorgesehenen Kontaktierungseinrichtung (11) elektrisch verbindbar.

## Beschreibung

Die Erfindung betrifft ein Steuergerät, insbesondere für eine Lenkung mit elektrischer Hilfskraftunterstützung, das an einer bestimmten Stelle an einer Außenhülle eines Elektromotors angeordnet ist.

Die aus dem Stand der Technik bekannten gattungsgemäßen Steuergeräte erfordern eine relativ aufwändige elektrische Verbindung vom Steuergerät zum Elektromotor. Eine Abhilfe schafft diesbezüglich ein Steuergerät, das axial an einer Stirnseite des Elektromotors angeordnet ist. Nachteilig hierbei ist jedoch, dass diese Anordnung einen verhältnismäßig großen Bauraum in axialer Richtung des Elektromotors erfordert. Deshalb sind die Einbaumöglichkeiten dieser Anordnung insbesondere im Bereich der oberen Lenksäule stark eingeschränkt.

Die Erfindung hat die Aufgabe, ein Steuergerät der eingangs genannten Art dahingehend zu verbessern, dass die elektrische Verbindung zwischen dem Steuergerät und dem Elektromotor möglichst einfach ist und die Anordnung aus Steuergerät und Elektromotor einen möglichst geringen Einbauraum erfordert.

Die Erfindung löst die gestellte Aufgabe durch ein Steuergerät der eingangs genannten Art, bei dem erfindungsgemäß das Steuergerät und der Elektromotor mittels einer an einer Stirnseite des Elektromotors vorgesehenen Kontaktierungseinrichtung elektrisch verbindbar ist. Die Kontaktierungseinrichtung lässt sich einfach, schnell und preiswert montieren. Außerdem kann mit ihr das Steuergerät auf der Außenhülle des Elektromotors Platz sparend angeordnet werden, so dass durch die Kontaktierungseinrichtung die Anforderungen nach einem geringen Einbauraum erfüllt werden. Da die Kontaktierungseinrichtung eine möglichst enge Anbindung des Steuergerätes an den Elektromotor erlaubt, wird durch die Kontaktierungseinrichtung eine besonders hohe elektromagnetische Verträglichkeit sichergestellt.

Ebenfalls günstig bezüglich eines geringen Einbauraums ist es, wenn die Kontaktierungseinrichtung auch an einer Stirnseite des Steuergerätes angeordnet werden kann.

Um die Kontaktierungseinrichtung möglichst schnell und einfach sowohl mit dem Elektromotor als auch mit dem Steuergerät verbinden zu können, kann die Kontaktierungseinrichtung lösbar befestigbare Steckverbindungen und/oder Schneidklemmkontakte aufweisen.

Sehr zuverlässige elektrische Verbindungen können jedoch auch hergestellt werden, wenn die Kontaktierungseinrichtung an den Elektromotor und an das Steuergerät anlötbar und/oder anschweißbar ist.

Um den Verkabelungsaufwand minimal zu halten, kann die Kontaktierungseinrichtung eine gedruckte Leiterplatte aufweisen.

Die gedruckte Leiterplatte kann flexibel sein, so dass ein und dieselbe Leiterplatte an unterschiedliche Einbausituationen angepasst werden kann beziehungsweise eine gemeinsame Leiterplatte für das Steuergerät und die Kontaktierungseinrichtung verwendet wird. Eine teure Bevorratung von Leiterplatten mit unterschiedlicher Formgebung kann folglich entfallen.

Die Kontaktierungseinrichtung kann sehr kostengünstig in großen Stückzahlen hergestellt werden, wenn sie ein Stanz-Biegeteil aufweist.

Je nach baulichen Gegebenheiten kann es jedoch auch vorteilhaft sein, wenn die Kontaktierungseinrichtung elektrische Leitungen aufweist.

Die Kontaktierungseinrichtung kann optional einen Sensor zur Erfassung eines Drehwinkels und/oder zur Erfassung einer Drehzahl des Elektromotors aufweisen.

Ferner kann die Kontaktierungseinrichtung eine elektrische Bauelemente zur Leistungsübertragung aufweisende Leistungselektronik aufweisen. Dies reduziert die Verlustleistung und erspart separate Bauelemente, die zusätzlich zur Kontaktierungseinrichtung oder dem Steuergerät vorgesehen werden müssten.

Die Erfindung betrifft ferner eine Lenkung, insbesondere für ein Kraftfahrzeug, die erfindungsgemäß mit einem Steuergerät nach einem der Ansprüche 1 bis 11 ausgerüstet ist.

Nachfolgend werden verschiedene Ausführungsbeispiele einer Kontaktierungseinrichtung anhand der beiliegenden Zeichnungen näher erläutert.

Im Einzelnen zeigen:
- Fig. 1: eine Seitenansicht einer ersten Ausführungsform der Kontaktierungseinrichtung;
- Fig. 2: eine Schnittansicht einer zweiten Ausführungsform der Kontaktierungseinrichtung;
- Fig. 3: eine Schnittansicht einer dritten Ausführungsform der Kontaktierungseinrichtung.

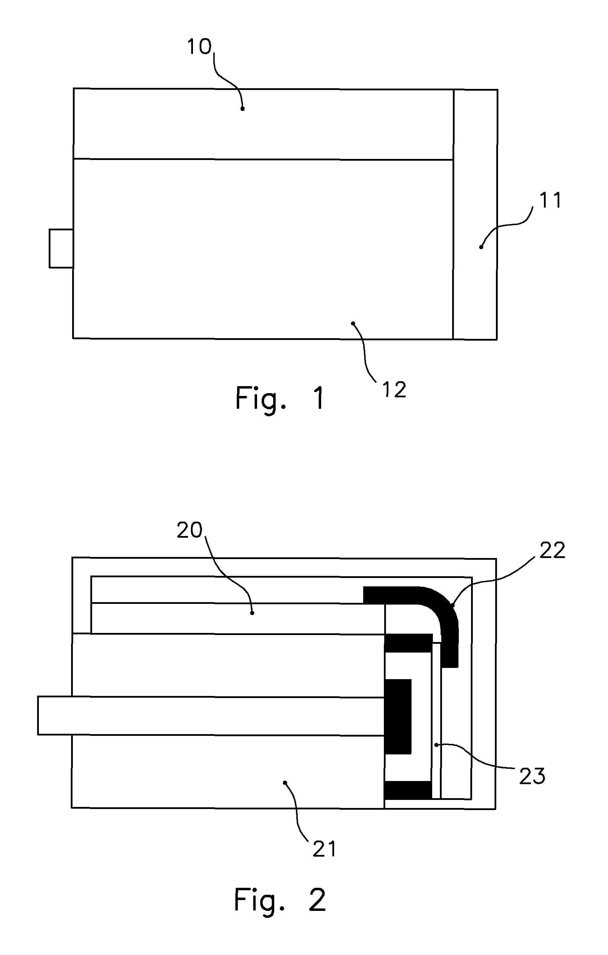

Fig. 1 zeigt ein Steuergerät 10, das mittels einer Kontaktierungseinrichtung 11 mit einem Elektromotor 12 elektrisch verbunden ist. Die Kontaktierungseinrichtung 11 ist sowohl an einer Stirnseite des Elektromotors 12 als auch an einer Stirnseite des Steuergerätes 10 angeordnet. Durch diese Anordnung wird wenig Einbauraum verbraucht, was sich auch hinsichtlich der strengen Anforderungen, die bezüglich des Crashfallverhaltens gestellt werden, günstig auswirkt.

Ein Steuergerät 20 und ein Elektromotor 21 sind durch eine als flexible Leiterplatte ausgebildete Kontaktierungseinrichtung 22 miteinander verbunden (siehe Fig. 2). Die Kontaktierungseinrichtung 22 ist somit an unterschiedliche Einbausituation flexibel anpassbar. Die Kontaktierungseinrichtung 22 verbindet zweckmäßigerweise das Steuergerät 20 mit einer Leiterplatte 23 des Elektromotors 21.

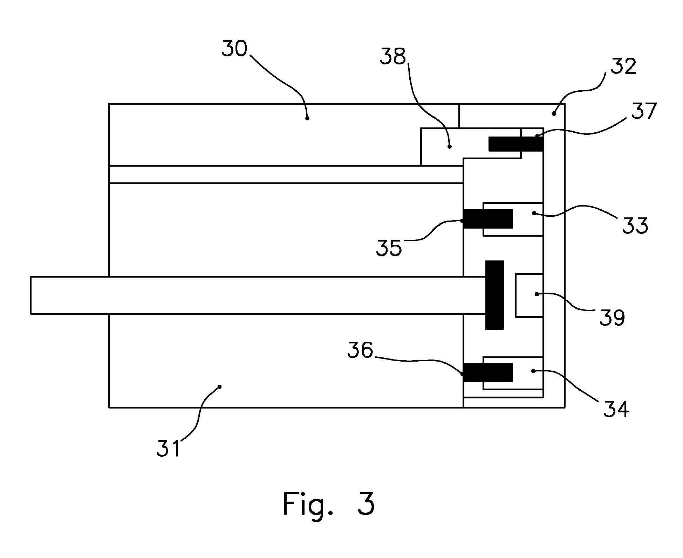

Fig. 3 zeigt ein Steuergerät 30 und einen Elektromotor 31, die mittels einer Kontaktierungseinrichtung 32 elektrisch miteinander verbunden sind.

Die Kontaktierungseinrichtung 32 weist Steckverbindungen 33 und 34 auf, die auf motorseitigen Steckverbindungen 35 und 36 aufgesteckt sind. Dadurch kann die Kontaktierungseinrichtung 32 sehr schnell und einfach mit dem Elektromotor 31 elektrisch verbunden werden.

Ferner weist die Kontaktierungseinrichtung 32 eine Steckverbindung 37 auf, die auf eine steuergeräteseitige Steckverbindung 38 aufgesteckt ist. Dies ermöglicht eine schnelle und einfache elektrische Verbindung zwischen der Kontaktierungseinrichtung 32 und dem Steuergerät 30.

Die Kontaktierungseinrichtung 32 weist einen Sensor 39 auf, mit dem ein Drehwinkel und/oder eine Drehzahl des Elektromotors 31 erfasst werden kann.
- 10: Steuergerät
- 11: Kontaktierungseinrichtung
- 12: Elektromotor
- 20: Steuergerät
- 21: Elektromotor
- 22: Kontaktierungseinrichtung
- 23: Leiterplatte
- 30: Steuergerät
- 31: Elektromotor
- 32: Kontaktierungseinrichtung
- 33: Steckverbindung
- 34: Steckverbindung
- 35: Steckverbindung
- 36: Steckverbindung
- 37: Steckverbindung
- 38: Steckverbindung
- 39: Sensor

## Patentansprüche

1. Steuergerät (10, 20, 30), insbesondere für eine Lenkung mit elektrischer Hilfskraftunterstützung, das an einer bestimmten Stelle an einer Außenhülle eines Elektromotors (12, 21, 31) angeordnet ist, **dadurch gekennzeichnet, dass** das Steuergerät (10, 20, 30) und der Elektromotor (12, 21, 31) mittels einer an einer Stirnseite des Elektromotors (12, 21, 31) vorgesehenen Kontaktierungseinrichtung (11, 22, 32) elektrisch verbindbar ist.

2. Steuergerät (10, 30) nach Anspruch 1, **dadurch gekennzeichnet, dass** die Kontaktierungseinrichtung (11, 32) auch an einer Stirnseite des Steuergerätes (10, 30) angeordnet ist.

3. Steuergerät (30) nach Anspruch 1 oder 2, **dadurch gekennzeichnet, dass** die Kontaktierungseinrichtung (32) lösbar befestigbare Steckverbindungen (33, 34, 37) und/oder Schneidklemmkontakte aufweist.

4. Steuergerät (10, 20) nach einem der Ansprüche 1 bis 3, **dadurch gekennzeichnet, dass** die Kontaktierungseinrichtung (11, 22) an den Elektromotor (12, 21) und/oder an das Steuergerät (10, 20) anlötbar und/oder anschweißbar ist.

5. Steuergerät (20) nach einem der Ansprüche 1 bis 4, **dadurch gekennzeichnet, dass** die Kontaktierungseinrichtung (22) eine gedruckte Leiterplatte aufweist.

6. Steuergerät (20) nach Anspruch 5, **dadurch gekennzeichnet, dass** die gedruckte Leiterplatte flexibel ist.

7. Steuergerät nach einem der Ansprüche 1 bis 6, **dadurch gekennzeichnet, dass** eine gemeinsame Leiterplatte für das Steuergerät und die Kontaktierungseinrichtung verwendet wird.

8. Steuergerät (10, 30) nach einem der Ansprüche 1 bis 7, **dadurch gekennzeichnet, dass** die Kontaktierungseinrichtung (11, 32) ein Stanz-Biegeteil aufweist.

9. Steuergerät (10) nach einem der Ansprüche 1 bis 8, **dadurch gekennzeichnet, dass** die Kontaktierungseinrichtung (11) elektrische Leitungen aufweist.

10. Steuergerät (30) nach einem der Ansprüche 1 bis 9, **dadurch gekennzeichnet, dass** die Kontaktierungseinrichtung (32) einen Sensor (39) zur Erfassung eines Drehwinkels und/oder einer Drehzahl des Elektromotors (31) aufweist.

11. Steuergerät (10, 20, 30) nach einem der Ansprüche 1 bis 10, **dadurch gekennzeichnet, dass** die Kontaktierungseinrichtung eine elektrische Bauelemente zur Leistungsübertragung aufweisende Leistungselektronik aufweist.

12. Lenkung, insbesondere für ein Kraftfahrzeug, **dadurch gekennzeichnet, dass** sie mit einem Steuergerät (10, 20, 30) nach einem der Ansprüche 1 bis 11 ausgerüstet ist.
